Europäisches Patentamt

European Patent Office

Office européen des brevets

(11) Veröffentlichungsnummer: **0 416 231 A1**

## (12) EUROPÄISCHE PATENTANMELDUNG

(21) Anmeldenummer: 90112360.4

(22) Anmeldetag: 28.06.90

(51) Int. Cl.⁵: **F16L 33/01**, F16L 33/20,
F16L 39/02, F16L 47/02

(30) Priorität: 05.09.89 DE 8910586 U

(43) Veröffentlichungstag der Anmeldung:
13.03.91 Patentblatt 91/11

(84) Benannte Vertragsstaaten:
DE ES FR IT

(71) Anmelder: Schieffer GmbH & Co
Kommanditgesellschaft
Am Mondschein Postfach 26 40
W-4780 Lippstadt(DE)

(72) Erfinder: Wulf, Johannes

Espenweg 26
W-4783 Anröchte(DE)
Erfinder: Schulte, Johannes
Augustastrasse 3
W-4784 Rüthen(DE)

(74) Vertreter: Gossel, Hans K., Dipl.-Ing. et al
Rechtsanwälte Lorenz E.,Gossel
H.K.,Dipl.-Ing.,Philipps I.,Schäuble,
P.B.,Dr.,Jackermeier,S.,Dr,Zinnecker,A.,Dipl.--
Ing.,Laufhütte,D., Dr.-Ing.,Ingerle,R.E.,Dr.
Widenmayerstrasse 23 D-8000 München
22(DE)

(54) Abdichtung für einen Zweifachschlauch.

(57) Eine Abdichtung für einen Zweifachschlauch besteht aus einem Innenschlauch (1), einem diesen umgebenden Außenschlauch (2) und einem in den Innenschlauch (1) eingedrückten Ventilnippel (3). Damit auf einfache Weise eine zuverlässige Abdichtung gewährleistet ist, sind der Znnenschlauch (1) und der Außenschlauch (2) im Bereich des Ventilnippels (3) unter Bildung einer Schmelzzone (4) miteinander verschmolzen, insbesondere miteinander verschweißt.

Fig. 1

EP 0 416 231 A1

## ABDICHTUNG FÜR EINEN ZWEIFACHSCHLAUCH

Die Erfindung betrifft eine Abdichtung für einen Zweifachschlauch, bestehend aus einem Innenschlauch, einem diesen umgebenden Außenschlauch und einem in den Innenschlauch eingedrückten Ventilnippel. Derartige Abdichtungen sind in der Praxis allgemein bekannt. Bei den vorbekannten Lösungen ist noch eine Dichtmanschette vorhanden, die das Ende des Innenschlauches vollständig umgibt. Sie verläuft vom Bereich zwischen dem Innenschlauch und dem Außenschlauch über das Ende des Innenschlauches in den Bereich zwischen dem Innenschlauch und dem Ventilnippel An der besonders kritischen Stelle des Ventilnippels wird also die Dichtheit zwischen Ventilnippel, Innenschlauch und Außenschlauch mit Hilfe der Dichtmanschette hergestellt.

Die vorbekannte Abdichtung hat diverse Nachteile:

1. Toleranzen der einzelnen Elemente (Ventilnippel, Innenschlauch, Außenschlauch, Dichtmanschette) können nicht überbrückt werden;

2. Die Dichtmanschette kann sowohl bei ihrer Produktion als auch bei der diffizilen Montage beschädigt werden;

3. wenn die Einzelteile aus unterschiedlichen Materialien bestehen (z.B. Schlauch aus PVC und Dichtmanschette aus Gummi), können beim Zusammenfugen nicht kontrollierbare Alterungen und Weichmacherwanderungen auftreten, die besonders die Langzeit-Lebensdauer negativ beeinflussen;

4. durch mechanische Einflüsse (Bewegen von Ventilen, Box, Hüllschlauch usw.) kann sich der Dichtsatz verschieben, wodurch dessen Funktion in Frage gestellt werden kann;

5. durch die üblicherweise vorhandene Schellenbefestigung der Dichtmanschette auf dem Ventilnippel ist ebenfalls ein leichtes Verschieben der einzelnen Komponenten nicht ausgeschlossen, insbesondere bei unterschiedlichen Temperaturen und bei Schwitzwasserbildung.

Aufgabe der Erfindung ist es, eine Abdichtung für einen Zweifachschlauch zu schaffen, welche die angegebenen Nachteile vermeidet und auf einfache Weise eine zuverlässige Abdichtung gewährleistet.

Erfindungsgemäß wird diese Aufgabe dadurch gelöst, daß der Innenschlauch und der Außenschlauch im Bereich des Ventilnippels unter Bildung einer Schmelzzone miteinander verschmolzen, insbesondere miteinander verschweißt sind. Die beiden Schlauchkomponenten Innenschlauch und Außenschlauch sind in einem speziellen Verfahren für den Anschlußstutzenbereich miteinander im kontrollierten Dichtbereich (Schmelzbereich) zu einer Einheit verschmolzen. Hierdurch entfällt die mit sehr großen Nachteilen behaftete Dichtmanschette völlig. Die Schlaucheinheit kann direkt auf das Ventil aufgeschoben und montiert werden.

Eine vorteilhafte Weiterbildung der Erfindung ist gekennzeichnet durch eine die Schmelzzone umgebende Preßhülse. Durch Verwendung dieser Preßhülse mit entsprechender Verpressung wird die Schlaucheinheit fest mit dem Ventil verbunden. Es besteht absolute Dichtheit in allen Belangen. Die geschilderten Nachteile an dieser diffizilen Stelle können vollkommen ausgeschlossen werden und die Betriebs- und Funktionssicherheit des Systems wird wesentlich erhöht.

Ein Ausführungsbeispiel der Erfindung wird nachstehend anhand der beigefügten Zeichnungen im einzelnen erläutert. In den Zeichnungen zeigt

Fig. 1 ein Ausführungsbeispiel der Erfindung und

Fig. 2 ein Ausführungsbeispiel einer vorbekannten Lösung.

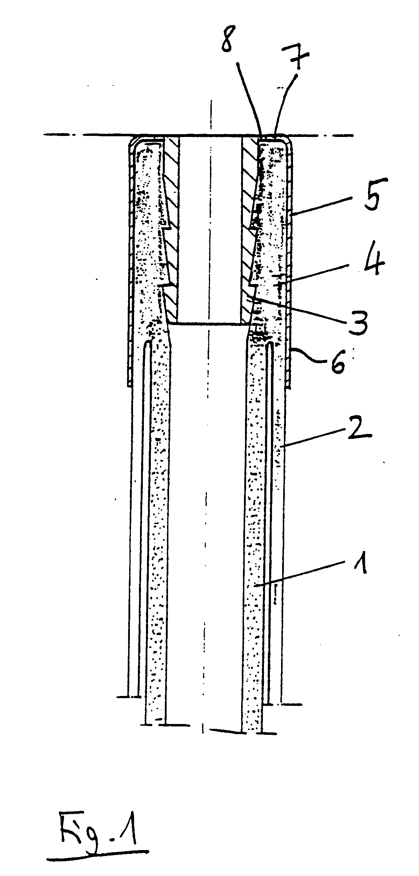

Die in Fig. 1 gezeigte Abdichtung für einen Zweifachschlauch besteht aus einem Innenschlauch 1, einem diesen umgebenden Außenschlauch 2 und einem in den Innenschlauch 1 eingedrückten Ventilnippel 3. Der Innenschlauch 1 und der Außenschlauch 2 sind im Bereich des Ventilnippels 3 unter Bildung einer Schmelzzone 4 miteinander verschmolzen, insbesondere miteinander verschweißt, vorzugsweise miteinander hochfrequenzverschweißt. Die Schmelzzone 4 ist von einer Preßhülse 5 umgeben, die einen zylindrischen, den Außenschlauch 2 umgebenden Bereich 6 und einen radialen, kreisringförmigen, dem Ventilnippel 3 zugewandten Bereich 7 aufweist. Der Innendurchmesser des zylindrischen Bereichs 6 der Preßhülse 5 ist etwas kleiner als der Außendurchmesser des Außenschlauchs 2, so daß die Schmelzzone 4 an den Ventilnippel 3 und dessen sägezahnförmige Ausnehmungen gedrückt wird. Der Innendurchmesser des radialen Bereiches 7 der Preßhülse 5 ist größer als der Außendurchmesser des Ventilnippels 3, so daß die Preßfunktion der Preßhülse nicht beeinträchtigt ist; der entsprechende kreisringförmige Luftspalt ist mit dem Bezugszeichen 8 versehen.

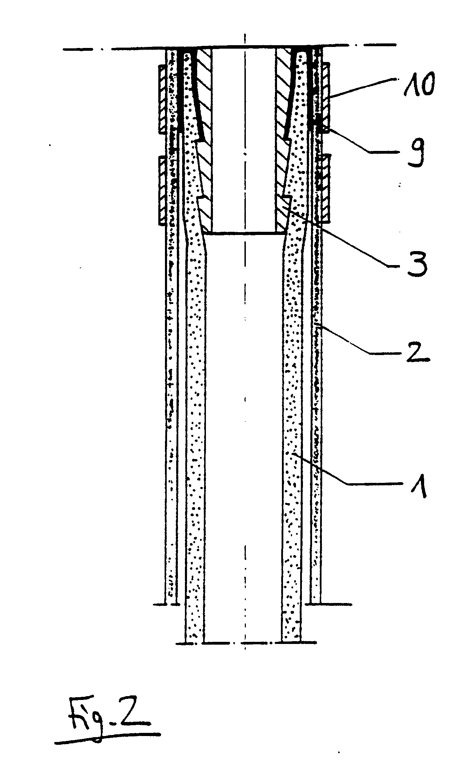

Bei der in Fig. 2 dargestellten, vorbekannten Lösung ist ebenfalls ein Zweifachschlauch vorhanden, bestehend aus einem Innenschlauch 1, einem diesen umgebenden Außenschlauch 2 und einem in den Innenschlauch 1 eingedrückten Ventilnippel 3. Die Dichtmanschette 9 verläuft von dem Ringraum zwischen Innenschlauch 1 und Außenschlauch 2 über das Ende des Innenschlauchs 1 in den Zwischenraum zwischen Innenschlauch 1 und Ventilnippel 3. Hierdurch entstehen die eingangs angegebenen Nachteile. Die Befestigung erfolgt über eine Schlauchmanschette 10

## Ansprüche

1. Abdichtung für einen Zweifachschlauch, bestehend aus einem Innenschlauch (1), einem diesen umgebenden Außenschlauch (2) und einem in den Innenschlauch (1) eingedrückten Ventilnippel (3), **dadurch gekennzeichnet,** daß der Innenschlauch (1) und der Außenschlauch (2) im Bereich des Ventilnippels (3) unter Bildung einer Schmelzzone (4) miteinander verschmolzen, insbesondere miteinander verschweißt sind.

2. Abdichtung nach Anspruch 1, gekennzeichnet durch eine die Schmelzzone (4) umgebende Preßhülse (5).

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | DE - A1 - 3 516 595 <br> (WOCO) <br>     * Gesamt; insbesondere <br>      Seite 8, letzter Absatz * <br> -- | 1 | F 16 L 33/01 <br> F 16 L 33/20 <br> F 16 L 39/02 <br> F 16 L 47/02 |
| P,A | DE - C1 - 3 808 734 <br> (FRIEDRICHSFELD GMBH) <br>     * Gesamt * <br> -- | 1 | |
| A | US - A - 4 111 466 <br> (DEREGIBUS) <br><br> ---- | | |

| | RECHERCHIERTE SACHGEBIETE (Int Cl⁵) |
|---|---|
| | F 16 L 11/00 <br> F 16 L 13/00 <br> F 16 L 33/00 <br> F 16 L 39/00 <br> F 16 L 47/00 |

Der vorliegende Recherchenbericht wurde für alle Patentansprüche erstellt.

| Recherchenort | Abschlußdatum der Recherche | Prüfer |
|---|---|---|
| WIEN | 07-11-1990 | SCHUGANICH |